# EUROPEAN PATENT APPLICATION

(11) **EP 1 850 057 A1**
(43) Date of publication of application: **31.10.2007**
(21) Application number: 06008379.7
(22) Date of filing: 24.04.2006
(51) Int. Cl.: F16P 3/14

(54) **Control system for controlling an operating zone**

(71) Applicant: INFRA S.R.L., 36100 Vicenza VI (IT)
(72) Inventor: Gaddo, Franco, 35141 Padova (IT)
(74) Representative: Crugnola, Pietro

(57) **Abstract**

A control system for controlling an operating zone(2; 102) comprises a transmitting unit (6; 106) for transmitting an electromagnetic radiation ray (7) that is interceptable by a body in said operating zone (2; 102), a receiving unit(8) for receiving said ray (7), electric power means (9, 10, 11) for powering said transmitting unit (6; 106), said electric power means (9, 10, 11) comprising a photovoltaic device (9) and an emitting device (11) for emitting radiant energy to said photovoltaic device (9).

## Description

The invention relates to a control system for controlling an operating zone. The control system according to the invention can be used in the residential sector for controlling an entrance or exit provided with an automatically controlled gate or door. Alternatively, the control system according to the invention can be used in the industrial sector to warn the presence of an object in the operating zone, in order to achieve a count of objects, a dimensional check of the objects, monitoring of the operating zone or similar.

Automatic gates are known that are drivable by an electric motor for opening or closing a passage, identified by an opening obtained in a fixed structure such as a fence or confining wall. The automatic gates are normally provided with a control system comprising a transmitting unit suitable for generating an electromagnetic radiation ray, for example an infrared ray, and a receiving unit suitable for receiving the ray. Usually, the receiving unit is mounted on the fixed structure in which the passage is obtained and can, for example, be fixed to this structure, enclosed therein or be supported by a column positioned on one side of the passage.

The transmitting unit is mounted in such a way as to face the receiving unit and can be fixed to the gate, for example.

The control system furthermore comprises a control unit connected to the receiving unit so as to receive a signal from the latter.

When there are no persons or objects obstructing the passage, the electromagnetic radiation ray generated by the transmitting unit is received by the receiving unit. In these conditions, the gate can open or close according to the user's commands.

If on the other hand a person, an animal or an object obstruct the passage, the electromagnetic radiation ray emitted by the transmitting unit is intercepted and is no longer received by the receiving unit. In this case, the control unit immediately stops the gate, preventing any further movement thereof that could injure or harm the person, animal or object that is near the passage.

The receiving unit is connected to an electric power line from which it receives the electric energy required to operate. Connecting also the transmitting unit to the electric line would entail some drawbacks, as the electric cables would have to be installed at two distinct points, namely the point at which the receiving unit is positioned and the point at which the transmitting unit is positioned. This operation would be particularly complicated if, as occurs in most cases, the transmitting unit were mounted on a movable part, i.e. on the gate.

In order to avoid the aforementioned drawbacks, the transmitting unit is usually powered by a special disposable battery rather than being connected to the electric power line. Nevertheless, the battery that powers the transmitting unit has to be replaced periodically, which entails time losses for the user.

If the user forgets to replace the battery periodically, the latter may also discharge suddenly, thus stopping the automatic gate, which causes further inconveniences.

Furthermore, replacing the battery of the transmitting unit entails a certain expenditure on the user's part, as it is necessary to acquire a new battery.

Lastly, if the user is not capable of replacing the battery, it is necessary to call a qualified operator, which involves further costs.

Similar drawbacks occur in all residential and industrial applications in which control systems are used that are provided with a transmitting unit and with a receiving unit positioned on opposite sides of an operating zone.

An object of the invention is to improve the control systems for controlling an operating zone that are useable in the residential or in the industrial sector.

A further object is to simplify the maintenance operations of the control systems for controlling an operating zone.

A still further object is to reduce the running and maintenance costs of control systems for controlling an operating zone.

In a first aspect of the invention, a control system is provided for controlling an operating zone, comprising a transmitting unit for transmitting an electromagnetic radiation ray that is interceptable by a body in said operating zone, a receiving unit for receiving said ray, electric power means for powering said transmitting unit, characterised in that said electric power means comprises an emitting device for emitting radiant energy and a photovoltaic device for converting said radiant energy into electric energy.

Owing to the invention, it is possible to obtain a control system for controlling an operating zone the maintenance of which is simpler and more economical than that of known control systems.

The photovoltaic device in fact converts the radiant energy emitted by the emitting device into electric energy that can be used to power the transmitting unit.

This enables the use of the battery for powering the transmitting unit to be avoided, or the rechargeable batteries to be used that are charged by the photovoltaic device. It is therefore no longer necessary to replace the battery periodically, with consequent saving of time and costs on the user's part.

Alternatively, the transmitting unit can be provided with normal disposable batteries that intervene only in the short periods in which the photovoltaic device is not able to supply sufficient electric energy to the transmitting unit. In this case, the invention enables the time to be decreased significantly in which the disposable batteries are exploited and the durability of these batteries to be thus increased. This enables the costs and inconveniences that the user has to face to be reduced.

In a second aspect of the invention, a control system is provided for controlling a passage zone, comprising a transmitting unit for transmitting an electromagnetic radiation ray that is interceptable by a body in said passage zone, a receiving unit for receiving said ray, electric power means for powering said transmitting unit, characterised in that said electric power means comprises removable electric coupling means suitable for being connected to an electric power line when said transmitting unit is in a preset position.

Owing to the removable electric coupling means, the transmitting unit can be connected to the electric power line in a preset position, for example when the passage zone is open or when it is closed. In this preset position, possible rechargeable power means included in the transmitting unit can be charged. In this way, it is possible to avoid using disposable batteries or to at least increase the durability thereof, and consequently simplify the maintenance operations of the control system.

The invention can be better understood and implemented with reference to the enclosed drawings, that show some exemplifying and non-limitative embodiments thereof, in which:
Figure 1 is a schematic perspective view of a control system associated with an automatic gate;
Figure 2 is a schematic perspective view of a control system for checking the presence or absence of an object in an operating zone.

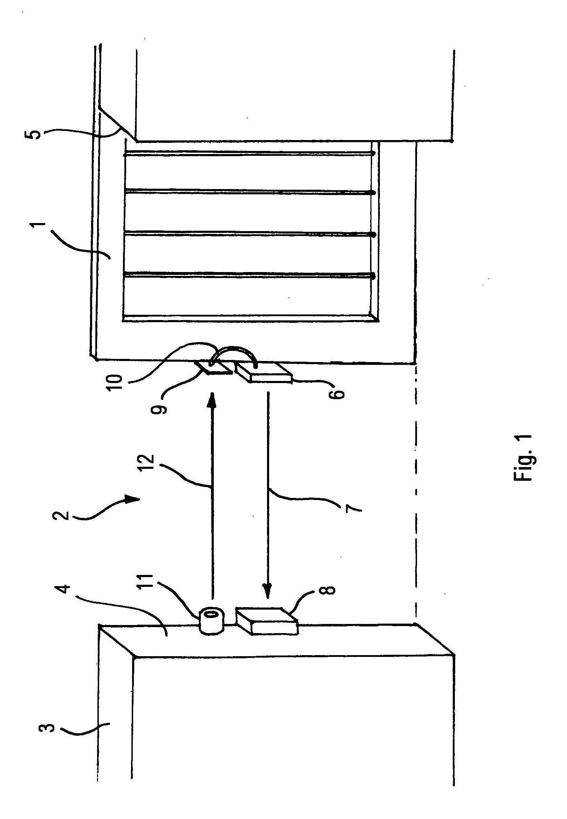

Figure 1 shows an automatic gate 1, that is for example drivable by an electric motor, that is slidable along a guide, that is not shown, to open or close a passage 2. Through the passage it is possible to enter an internal zone from an external zone, for example enter a garden or a courtyard from a road, or vice versa exit from the internal zone to the external zone.

The passage 2 is identified by an opening obtained in a fixed fencing structure that delimits the internal zone, for example in a wall 3. The passage 2 is defined between a first side 4 and a second side 5 of the fixed fencing structure, the second side 5 being opposite the first side 4.

With the automatic gate 1 a photoelectric barrier is provided comprising a control system for controlling the operation of the automatic gate 1 and stopping the movement thereof if necessary. The control system comprises a transmitting unit 6 for generating an electromagnetic radiation ray 7, for example of infrared radiation. A receiving unit 8 is arranged in a position facing the transmitting unit 6, so as to receive the ray 7. The receiving unit 8 is mounted on the first side 4 whilst, in the example in Figure 1, the transmitting unit 6 is fixed to the automatic gate 1.

In an embodiment that is not shown, the transmitting unit 6 can be mounted on the fixed fencing structure, for example at the second side 5, so as to also face the receiving unit 8.

The control system furthermore comprises a control unit that is not shown that can be positioned near the first side 4 of the passage 2. The control unit is connected to the receiving unit 8 in such a way as to receive signals from the latter.

The receiving unit 8 and the control unit are connected to an electric power line from which they receive the energy necessary for the operation thereof, for example by means of electric cables inserted inside the wall 3 or passing into the ground near the first side 4.

On the other hand, for powering the transmitting unit 6, electric power means is provided that may comprise a photovoltaic cell 9 connected to the transmitting unit 6 by means of a connecting cable 10. The photovoltaic cell 9 is able to absorb an electromagnetic radiation of a suitable wavelength emitted to the photovoltaic cell 9 by an emitting device 11, as will be explained below in detail, and to generate and electromotive force that enables the transmitting unit 6 to operate. The wavelength at which the photovoltaic cell 9 is sensitive can be selected freely by the producer and can be included in the range of the wavelength of the visible or invisible radiation. In the latter case, the photovoltaic cell 9 may be sensitive to infrared radiation, or to ultraviolet radiation.

In the embodiment shown in Figure 1, the photovoltaic cell 9 is fixed to the automatic gate 1 near the transmitting unit 6. If the transmitting unit 6 is on the other hand mounted on the fixed fencing structure, also the photovoltaic cell 9 will be positioned near the second side 5 of the passage 2.

The control system furthermore comprises a source of artificial light, for example an emitting device 11, for emitting radiant energy in the form of beams 12 of electromagnetic radiation directed to the photovoltaic cell 9. The beams 12 of electromagnetic radiation have a wavelength belonging to the wavelength range at which the photovoltaic cell 9 is sensitive. For example, the emitting device 11 may emit infrared radiation, or ultraviolet radiation, or still visible light. The radiation generated by the emitting device 11 can be diffused or focussed, i.e. collimated.

The emitting device 11 is positioned at the first side 4 of the passage 2, near the receiving unit 8, and receives the energy that is necessary for operation from the electric power line, to which it is connected by the cables that power the receiving unit 8.

In the example shown in Figure 1, the emitting device 11 is separated from the receiving unit 8. It is nevertheless possible to house the emitting device 11 and the receiving unit 8 in the same casing.

During operation, the transmitting unit 6 emits the ray 7 directed to the receiving unit 8. The photovoltaic cell 9 converts into electric energy the radiation energy of the rays 12 of electromagnetic radiation originating from the emitting device 11, thus generating an electromotive force that enables the transmitting unit 6 to operate. In particular, the electromotive force generated by the photovoltaic cell 9 can charge rechargeable power means that powers the transmitting unit 6. The rechargeable power means may comprise one or more rechargeable batteries, or one or more storage batteries, or still one or more capacitors of suitable capacity. Alternatively, the photovoltaic cell 9 may power the transmitting unit 6 directly, without rechargeable power means being interposed.

In normally conditions the photovoltaic cell 9 may power the transmitting unit 6 directly. When the photovoltaic cell 9 is not able to provide sufficient energy to the transmitting unit 6, for example because the emitting device 11 is at an excessive distance from the photovoltaic cell 9 or because an obstacle is interposed between the emitting device 11 and the photovoltaic cell 9, the transmitting unit 6 can be powered by one or more normal disposable batteries, or by rechargeable power means, previously charged by the photovoltaic cell 9.

If no body, for example of a person, of an animal or of an object, is arranged near the passage 2, the ray 7 generated by the transmitting unit 6 is received by the receiving unit 8, which transmits a signal to the control unit. In this way the control unit is informed that the passage 2 is free and enables the automatic gate 1 to open and close according to the user commands.

If on the other hand any body is positioned near the passage 2, this body interrupts the ray 7 generated by the transmitting unit 6. The receiving unit 8 does not therefore receive any electromagnetic radiation ray and a signal of a missing ray is transmitted to the control unit. The latter stops the automatic gate 1 in the position in which it finds itself to exclude the possibility of injury to a living being or damage to an object due to further movements of the automatic gate 1.

It should be noted that the emitting device 11 and the photovoltaic cell 9 enable the transmitting unit 6 to operate without being connected to the electric power line. Therefore no connecting cable to the electric power line has to be provided near the second side 5 of the passage 2. This enables installation of the automatic gate 1 to be simplified inasmuch as it is sufficient to connect only the first side 4 to the electric power line.

It should furthermore be known that connecting the emitting device 11 to the electric power line does not entail particular difficulties, inasmuch as the emitting device 11 is positioned near the control unit, which is powered by the electric line.

Furthermore, it is not necessary to regularly replace the battery that powers the transmitting unit 6. In fact, the transmitting unit 6 can be powered directly by the photovoltaic cell 9, in which case the control system is devoid of any battery. Alternatively, if the transmitting unit 6 is provided with rechargeable power means, the latter is charged by the photovoltaic cell 9, which eliminates the need to replace periodically the battery of known control systems.

Maintenance operations of the automatic gate 1 are thus simplified and running costs are significantly reduced.

It should be noted that the emitting device 11 enables the photovoltaic cell 9 to generate sufficient electromotive force to power the transmitting unit 6 independently of the natural lighting conditions of the environment in which the automatic gate 1 is installed. In other words, the photovoltaic cell 9 is able to power the transmitting unit 6 even at night or if the automatic gate 1 is in a poorly lighted or even dark environment.

In a version, the emitting device 11 can be activated only when the natural light in the environment in which the automatic gate 1 is positioned is not sufficient to power the transmitting unit 6 by means of the photovoltaic cell 9.

It is also possible to adopt measures to reduce energy consumption by the transmitting unit 6. For example, when the automatic gate 1 is closed, the control unit can send a command signal to the transmitting unit 6 so that the transmitting unit 6 emits a electromagnetic radiation ray 7 of reduced intensity, or does not emit any ray 7. In this way, the safety of the automatic gate 1 is not compromised, inasmuch as if the automatic gate 1 is stationary in a closed position there is no danger of injuring persons or damaging objects arranged near the automatic gate 1. Thus the electromagnetic radiation ray 7 can be temporarily deactivated.

If it is desired that the electromagnetic radiation ray 7 should always be present, it is possible to reduce the intensity thereof in the closed position. If the transmitting unit 6 is mounted on the automatic gate 1, as shown in Figure 1, in the closed position the receiving unit 8 is also able to perceive a low-intensity ray 7, as when the automatic gate 1 is closed, the transmitting unit 6 is at a short distance from the receiving unit 8.

By deactivating the electromagnetic radiation ray 7 or reducing the intensity thereof it is possible to reduce energy consumption by the transmitting unit 6, which enables the photovoltaic cell 9 to charge the rechargeable power means associated with the transmitting unit 6 more quickly.

When the user sends an opening command to the automatic gate 1, the control unit generates a signal that induces the transmitting unit 6 to again emit an electromagnetic radiation ray 7 of standard intensity.

In an embodiment that is not shown, the control system does not comprise the photovoltaic cell 9 and the emitting device 11. The transmitting unit 6 is in this case provided with removable electric coupling means, comprising for example an electric contact or an electric plug that are suitable for being connected automatically to the electric power line when the transmitting unit 6 is in a preset position and being subsequently automatically disconnected from the line. For example, when the automatic gate 1 is in a closed position and the transmitting unit 6 is arranged near the first side 4 of the passage 2, the electric contact associated with the transmitting unit 6 can engage with a further electric contact obtained on the wall 3 and thus be connected to the electric power line.

In this way the transmitting unit 6 receives the energy necessary for charging the rechargeable power means with which it is provided.

As an alternative to the embodiment disclosed above, or in combination with it, if both the first side 4 and the second side 5 of the passage 2 are connected to the electric power line, the electric contact associated with the transmitting unit 6 can engage with another electric contact obtained on the second side 5 to supply energy to the rechargeable power means when the automatic gate 1 is in an open position.

The operations of replacing disposable batteries are thus avoided.

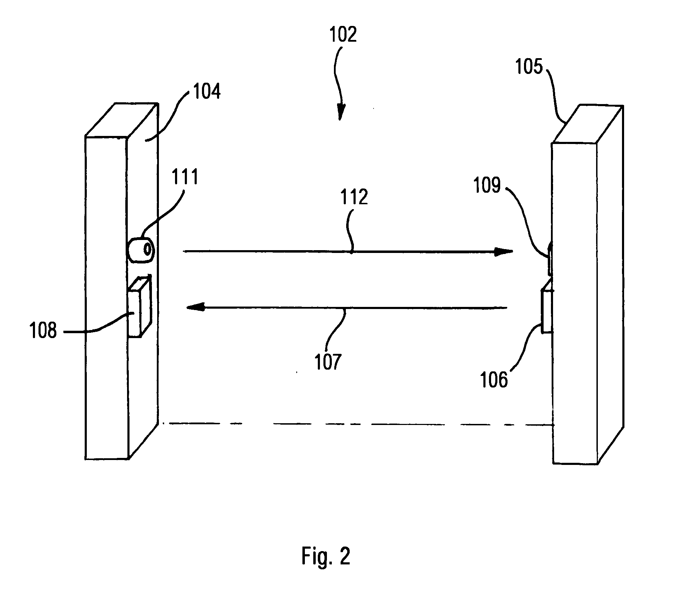

Figure 2 shows a control system included in a photoelectric barrier that is usable for residential or industrial applications.

The photoelectric barrier enables an operating zone 102 to be controlled that is interposed between a first support 104 and a second support 105 facing one another. The first support 104 and the second support 105 can be arranged in a fixed position or they can be movable. To the first support 104 a receiving unit 108 and an emitting device 111 are fixed that are completely similar to the receiving unit 8 and to the emitting device 11 disclosed with reference to Figure 1. Both the receiving unit 108 and the emitting device 111 are connected to an electric power network by means of cables that are not shown. The receiving unit 108 is connected to a control unit that is not shown, of automatic or manual type, that is suitable for receiving signals from the receiving unit 108 and reacting in accordance with these signals.

To the second support 105 a transmitting unit 106 and a photovoltaic cell 109 are fixed that are completely similar respectively to the transmitting unit 6 and the photovoltaic cell 9 disclosed with reference to Figure 1.

The transmitting unit 106 faces the receiving unit 108 in such a way as to emit an electromagnetic radiation ray 107 to the receiving unit 108, the ray 107 having a control function of the operating zone 102. The emitting device 111 on the other hand faces the photovoltaic cell 109, so as to send to the photovoltaic cell 109 radiant energy in the form of a an electromagnetic radiation beam 112. The photovoltaic cell 109 converts the radiating energy of the beam 102 into electric energy that powers the transmitting unit 106. The latter does not thus need to be physically connected to an electric supply line.

During operation, the transmitting unit 106 generates the electromagnetic radiation ray 107 directed to the receiving unit 108. If in the operating zone 102 a body of a person or of an object is present the ray 107 is intercepted by the body and does not manage to reach the receiving unit 108. The latter sends to the control unit a ray missing signal, thus informing the control unit of the presence of the body in the operating zone 102.

A photoelectric barrier of the type disclosed above can, for example, be used to count objects subsequently present in the operating zone 102, or to carry out a dimensional check of the objects, or still for monitoring purposes.

As already explained previously with regard to Figure 1, also in this case only the components mounted on the first support 104, i.e. the receiving unit 108 and the emitting device 111, are connected to the electric power line. The further components mounted on the second support 105, i.e. the photovoltaic cell 109 and the transmitting unit 106, do not, on the other hand, have to be powered by the electric line. In the photoelectric barrier it is thus possible to identify an active part connected to the electric power line, positioned on the first support 104, and a non-wired passive part positioned on the second support 105.

The control system shown in Figure 2 can replace, in the photoelectric barriers, known control systems comprising an active part provided with transmitting means for generating an electromagnetic radiation ray and receiving means for receiving the ray, and a passive part comprising a reflecting device, for example a reflex reflector, a mirror or another reflecting element, suitable for reflecting the ray generated by the transmitting means to the receiving means.

The known systems, whilst enabling the passive part provided with the reflecting device not to be connected to the electric power line, nevertheless have numerous drawbacks that are mainly linked to the reflecting device, the operation of which can be disturbed if reflecting objects enter the operating zone.

By using a control system of the type shown in Figure 2, it is possible to eliminate the reflecting device from the passive part, which enables the aforementioned drawbacks to be avoided, thus obtaining a simple and effective control system.

Both in the embodiment in Figure 1 and in the one in Figure 2, the control unit can send to the transmitting unit, through the beam 12 or 112, control signals that are useful for the operation of the transmitting unit. These signals may, for example, be suitable for optimising the energy consumption of the transmitting unit or for setting a specific coding or manner of emission of the ray 7 or 107 in order to activate particular operating functions (for example self-calibration of the system, optimation of sensitivity, etc) or to improve the reliability and the performance of the system.

## Claims

1. Control system for controlling an operating zone (2; 102), comprising a transmitting unit (6; 106) for transmitting an electromagnetic radiation ray (7; 107) that is interceptable by a body in said operating zone (2; 102), a receiving unit (8; 108) for receiving said ray (7), electric power means (9, 10, 11; 109, 111) for powering said transmitting unit (6; 106), **characterised in that** said electric power means (9, 10, 11; 109, 111) comprises an emitting device (11; 111) for emitting radiant energy and a photovoltaic device (9; 109) for converting said radiant energy into electric energy.

2. System according to claim 1, wherein said emitting device (11; 111) is connectable to an electric power line.

3. System according to claim 1 or 2, wherein said emitting device (11; 111) is associated with said receiving unit (8; 108).

4. System according to claim 3, wherein said emitting device (11; 111) is housed in a casing wherein also said receiving unit(8; 108) is contained.

5. System according to any preceding claim, wherein said photovoltaic device comprises a photovoltaic cell (9; 109).

6. System according to any preceding claim, wherein said transmitting unit (6; 106) is provided with rechargeable power means connected to said photovoltaic device (9; 109) so as to be recharged by said photovoltaic device (9; 109).

7. System according to any one of claims 1 to 5, wherein said transmitting unit (6; 106) is provided with at least a disposable battery for powering said transmitting unit (6; 106) when said photovoltaic device (9; 109) is inactive.

8. System according to any preceding claim, and furthermore comprising a control unit suitable for exchanging signals with said receiving unit(8; 108).

9. System according to claim 8, wherein said control unit is positionable near said receiving unit (8; 108).

10. System according to claim 8 or 9, wherein said control unit comprises means for reducing the energy consumption of said transmitting unit (6) when said operating zone (2) is closed.

11. System according to claim 10, wherein said control unit is programmed in such a way as to deactivate said ray (7) or to reduce the intensity thereof when said operating zone (2) is closed.

12. System according to any preceding claim, wherein said emitting device (11; 111) is programmed in such a way as to send, together with said radiant energy, a control signal for controlling the operation of said transmitting unit (6; 106).

13. Photoelectric barrier comprising a control system according to any one of claims 1 to 12.

14. Barrier according to claim 13, and comprising first supporting means (3; 104) for supporting said receiving unit (8; 108) and second supporting means (1; 105) for supporting said transmitting unit (6; 106) in a position facing said receiving unit (8; 108).

15. Barrier according to claim 14, wherein said first supporting means (3; 104) supports said emitting device (11; 111) and said second supporting means (1; 105) supports said photovoltaic device (9; 109) in a position facing said emitting device (11; 111).

16. Barrier according to claim 14 or 15, wherein said first supporting means (3; 104) is arranged in a fixed position on a first side of said operating zone (2; 102).

17. Barrier according to claim 16, wherein said second supporting means (105) is arranged in a fixed position on a second side of said operating zone (2; 102), said second side being opposite said first side.

18. Barrier according to any one of claims 14 to 16, wherein said first supporting means (3; 104) and said second supporting means (1; 105) are movable with respect to one another.

19. Control system for controlling a passage zone (2), comprising a transmitting unit (6) for transmitting an electromagnetic radiation ray (7) that is interceptable by a body in said passage zone (2), a receiving unit (8) for receiving said ray (7), electric power means for powering said transmitting unit (6), **characterised in that** said electric power means comprises removable electric coupling means suitable for being connected to an electric power line when said transmitting unit (6) is in a preset position.

20. System according to claim 19, wherein said removable electric coupling means is connected to rechargeable power means included in said electric power means, so as to charge said rechargeable power means in said preset position.

21. System according to claim 19 or 20, wherein said removable electric coupling means comprises at least an electric contact.

22. System according to any one of claims 19 to 21, wherein said transmitting unit (6) is movable between a first position wherein said passage zone (2) is open and a second position wherein said passage zone (2) is closed.

23. System according to claim 22, wherein said removable electric coupling means is connectable to said electric power line in said first position.

24. System according to claim 22 or 23, wherein said removable electric coupling means is connectable to said electric power line in said second position.
